# EUROPEAN PATENT APPLICATION

(11) **EP 3 978 878 A1**
(43) Date of publication of application: **06.04.2022**
(21) Application number: 21198781.3
(22) Date of filing: 24.09.2021
(51) Int. Cl.: G01C 21/36

(54) **NAVIGATION DEVICE**

(30) Priority: 02.10.2020 JP 2020167874
(71) Applicant: Faurecia Clarion Electronics Co., Ltd., Saitama-shi, Saitama 330-0081 (JP)
(72) Inventor: SATO, Hiroyasu, Saitama, 330-0081 (JP); KUBO, Atsushi, Saitama, 330-0081 (JP)
(74) Representative: Lavoix

(57) **Abstract**

The present disclosure provides alternative voice guidance in conformity with a current situation at a guidance point. A navigation device includes an image analysis unit configured to analyze an image in which a front of a vehicle is captured, a storage unit configured to store map information, a route search unit configured to search for a route to a target place set by a user, based on the map information to generate a recommended route, a voice guidance unit configured to provide, by voice or sound, guidance to a guidance point on the generated recommended route, and an input reception unit configured to receive a request for alternative voice guidance from the user, wherein when the input reception unit receives the request for alternative voice guidance, the voice guidance unit generates voice guidance for notifying the user of the guidance point, based on an analysis result of the image.

## Description

### BACKGROUND

The present invention relates to a navigation device.

In a case of moving to a target place by using a navigation device, voice guidance that indicates a right/left turn at an intersection or the like may be unclear in some cases. For example, even when voice guidance notifies a distance to an intersection where a turn is to be made, in a case where another intersection or the like is located near the intersection, a user may not be able to determine at which intersection the user needs to make a turn.

As a measure against this, there is a technique providing voice guidance provided with, as a mark, a store or the like located at a corner of an intersection. Further, for example, JP 2008-216065 A (PTL 1) describes a technique for providing voice guidance by changing a mark of a guidance point, such as an intersection where a turn is to be made, every time a user performs an operation of instructing alternative voice guidance.

PTL 1: JP 2008-216065 A

### SUMMARY

In the technique described in JP 2008-216065 A, a facility, a store, and the like that may serve as a mark of a guidance point are extracted from map information, and a mark is selected from the extracted facility, the extracted store, and the like, based on a priority order set by a user in advance. Thus, guidance may be provided with a mark that cannot be visually recognized by the user depending on a current situation near the guidance point. For example, a facility, a store, and the like that serve as a mark may be blocked by a roadside tree, another building, a large-sized vehicle, and the like, or a facility and the like as a mark may not be already there due to old map information.

The present invention has been made in view of such circumstances, and has an object to enable alternative voice guidance in conformity with a current situation at a guidance point.

The present application includes a plurality of solutions to at least a part of the problems described above. One example of the solutions is as follows.

In order to solve the problem described above, a navigation device according to an aspect of the present invention includes an image analysis unit configured to analyze an image in which a front of a vehicle is captured, a storage unit configured to store map information, a route search unit configured to search for a route to a target place set by a user, based on the map information to generate a recommended route, a voice guidance unit configured to provide, by voice or sound, guidance to a guidance point on the generated recommended route, and an input reception unit configured to receive a request for alternative voice guidance from the user, wherein when the input reception unit receives the request for alternative voice guidance, the voice guidance unit generates voice guidance for notifying the user of the guidance point, based on an analysis result of the image.

An aspect of the present invention can provide alternative voice guidance in conformity with a current situation at a guidance point.

Note that problems, configurations, and effects other than those described above will become apparent in the following description of the embodiments.

### BRIEF DESCRIPTION OF DRAWINGS

FIG. 1 is a block diagram illustrating a configuration example of an onboard device according to one embodiment of the present invention.
FIG. 2 is a diagram illustrating one example of a functional block of the onboard device.
FIG. 3 is a diagram illustrating one example of alternative voice guidance.
FIG. 4 is a diagram illustrating another example of the alternative voice guidance.
FIG. 5 is a flowchart for illustrating one example of alternative voice guidance processing.
FIG. 6 is a flowchart for illustrating one example of mark selection processing.
FIG. 7 is a flowchart for illustrating another example of the mark selection processing.
FIG. 8 is a flowchart for illustrating a method for adding a point to an object.

### DESCRIPTION OF EMBODIMENTS

With reference to the drawings, an embodiment of the present invention is described below. Note that, in all the drawings for describing the embodiment, in principle, the identical members are denoted with the identical reference symbols, and repeated description therefor is omitted as appropriate. In the following embodiment, it goes without saying that constituent elements therein (including element steps and the like) are not necessarily essential unless otherwise particularly stated or incontrovertibly considered as essentials in principle. When the expressions "constituted of A", "being formed of A", "including A", and "comprising A" are given, it goes without saying that the expressions are not intended to exclude elements other than A unless A otherwise is clearly stated as the only element. Similarly, in the following embodiment, when shapes, positional relationships, and the like of the constituent elements and the like are referred to, substantially approximate or similar shapes and the like are included unless otherwise particularly stated or incontrovertibly considered to be different in principle or the like.

### <Configuration Example of Onboard Device 10 according to One Embodiment of Present Invention>

An onboard device 10 according to one embodiment of the present invention is described below. The onboard device 10 corresponds to a navigation device according to the present invention.

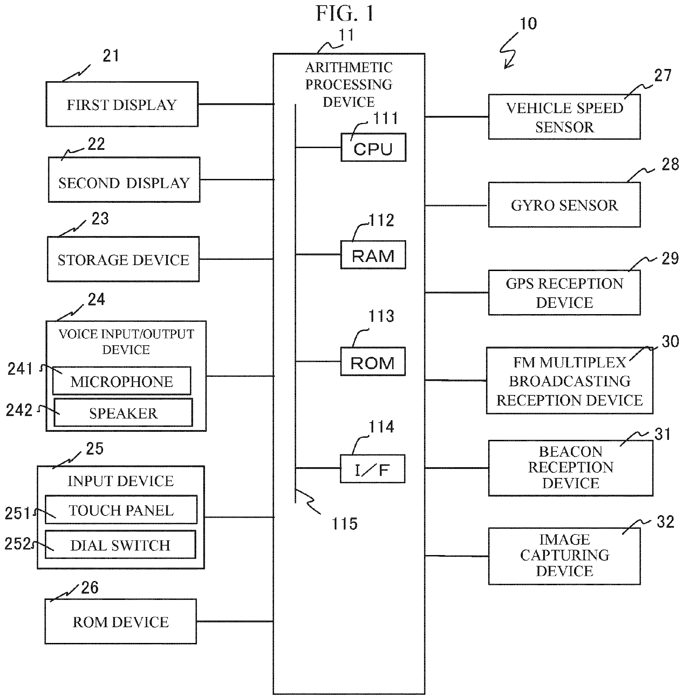

FIG. 1 illustrates a configuration example of the onboard device 10 according to one embodiment of the present invention. The onboard device 10 can be implemented with an onboard navigation device having a navigation function, for example. Thus, the onboard device 10 is, for example, a box-like device including a first display 21 on a front surface, and is housed in a console panel inside a vehicle. The onboard device 10 may include a mounting tool (bracket) to be mounted to the console panel, and may be mounted, for example, above the console panel inside the vehicle through intermediation of the mounting tool.

Here, the navigation function refers to a function that a navigation device usually has such as displaying map information, searching for a route, and navigating from a departure place (normally a current place) to a target place, and displaying traffic information. Note that the onboard device 10 is not limited to a dedicated navigation device, and may be, for example, a smartphone, a tablet terminal device, and a personal data assistance (PDA). In this case, the navigation function is provided by an application program installed in those devices or a server device to which those devices can connect.

The onboard device 10 can display, in addition to a navigation screen relevant to the navigation function, an air-conditioning screen for setting a temperature, an air flow rate, and the like of an air-conditioner, an audio video (AV) screen for selecting and reproducing audio or a video to be reproduced and for setting a sound volume, image quality, and the like, a screen for an application (a mailer, social network service (SNS), and the like) executed by a smartphone that is wirelessly connected, a telephone screen for outgoing and incoming calls, a camera screen for displaying an image captured by an onboard camera, and the like.

The onboard device 10 includes an arithmetic processing device 11, the first display 21, a second display 22, a storage device 23, a voice input/output device 24, an input device 25, and a read only memory (ROM) device 26.

The onboard device 10 further includes a vehicle speed sensor 27, a gyro sensor 28, a global positioning system (GPS) reception device 29, a frequency modulation (FM) multiplex broadcasting reception device 30, and a beacon reception device 31.

The arithmetic processing device 11 is a central unit that performs various types of processing of the onboard device 10. The arithmetic processing device 11 detects a current place through use of information output from various sensors such as the vehicle speed sensor 27, and the GPS reception device 29, for example. Based on the detected current place, the arithmetic processing device 11 reads map information required for display from the storage device 23 and the ROM device 26. The arithmetic processing device 11 develops the read map information into graphics and overlaps a mark indicating the current place thereon, to generate and output an image signal to be displayed on the first display 21. The arithmetic processing device 11 further calculates a recommended route connecting a current place to a target place set by a user (a driver or a passenger), through use of map information and the like stored in the storage device 23 or the ROM device 26. The arithmetic processing device 11 controls a screen display for route navigation by outputting a predetermined video signal to the first display 21. Furthermore, the arithmetic processing device 11 controls sound output for route navigation by outputting a predetermined voice signal to a speaker 242.

The arithmetic processing device 11 as described above includes a processor such as a central processing unit (CPU) 111 that executes various types of processing for performing arithmetic operations and controlling the devices, a random access memory (RAM) 112 that temporarily stores map information, arithmetic data, and the like having been read from a memory device such as the storage device 23 and a ROM 113, the ROM 113 that stores a boot program and the like executed by the CPU 111, an interface (I/F) 114 for connecting various types of hardware to the arithmetic processing device 11, and a bus 115 that connects those components to each other.

The first display 21 is installed at the center of the console panel provided on the front surface inside the vehicle, for example. The first display 21 is a unit that displays graphics information. The first display 21 is formed of a liquid crystal display, an organic electroluminescence (EL) display, or the like, for example. A transparent touch panel 251 is layered on the first display 21. Therefore, a user can perform a touch operation on (the touch panel 251 layered on) the first display 21. However, an operation on the first display 21 may also be performed through use of a dial switch 252.

The second display 22 is installed in an instrument panel provided in front of a driver's seat, for example.

Note that, it is desired that a display for displaying an image of a speed indicator, a tachometer, and the like, the display being provided to the vehicle in advance, be also used for the second display 22. As a matter of course, the second display 22 dedicated to the onboard device 10 may be provided. The second display 22 is a unit that displays graphics information. The second display 22 is formed of a liquid crystal display, an organic EL display, or the like, for example.

The storage device 23 is formed of a storage medium capable of performing at least reading and writing, such as a hard disk drive (HDD) and a non-volatile memory card. Various pieces of information (for example, map information and the like) used by the arithmetic processing device 11 are stored in the storage device 23, for example.

The voice input/output device 24 includes a microphone 241 as a voice input device and the speaker 242 as a voice output device. The microphone 241 collects voice or sound outside the onboard device 10 in addition to voice that is made by a driver or a passenger (user utterance). The speaker 242 outputs voice or sound such as route guidance and the like for a driver and the like, which is generated by the arithmetic processing device 11.

The input device 25 is a device that receives an instruction input from a user. The input device 25 includes the touch panel 251, the dial switch 252, a scroll key being another hard switch, and the like (not illustrated). The input device 25 outputs information in accordance with an operation of the keys and switches to another device such as the arithmetic processing device 11.

The touch panel 251 is formed of a transparent material, and is layered on the display screen of the first display 21. The touch panel 251 detects a touch operation by a finger of a user or a touch pen (touch-on (contact), dragging (move in a contact state), and touch-off (release of contact)). Thus, while visually recognizing the display screen of the first display 21, a user can input various operations by touching the display screen (actually, the touch panel 251). A position of a touch operation of a user is specified based on an x-y coordination set on the touch panel 251, for example. The touch panel 251 is formed of input detection elements of a capacitive sensing type, for example.

The ROM device 26 is formed of a storage medium capable of at least reading digital data, such as a ROM exemplified by a compact disk (CD)-ROM and a digital versatile disk (DVD)-ROM and an integrated circuit (IC) card. Video data, audio data, voice data, and the like are stored in the storage medium, for example.

The vehicle speed sensor 27 acquires a value used for calculation of a vehicle speed. The gyro sensor 28 is formed of an optical fiber gyroscope, an oscillation gyroscope, or the like, and detects angular velocity of rotation of a moving body (vehicle). The GPS reception device 29 can measure a current place, a traveling speed, and a traveling direction of the moving body by receiving signals from GPS satellites and measuring distances between the moving body and the GPS satellites and rates of change of the distances with respect to three or more satellites. Those devices are used for the arithmetic processing device 11 in order to detect a current place of a vehicle to which the onboard device 10 is mounted.

The FM multiplex broadcasting reception device 30 receives FM multiplex broadcasting that is transmitted through use of an FM broadcasting wave. FM multiplex broadcasting includes an outline of current traffic information relating to vehicle-information-and-communication-system (VICS) information, regulation information, service area/parking area (SA/PA) information, parking lot information, weather information, character information as general FM multiplex information, and the like.

The beacon reception device 31 receives an outline of current traffic information relating to VICS information, regulation information, service area/parking area (SA/PA) information, parking lot information, weather information, an emergency alert, and the like. The beacon reception device 31 may be, for example, an optical beacon that performs communication through light or a radio wave beacon that performs communication through a radio wave.

An image capturing device 32 is a so-called onboard camera, and captures an image of a vehicle inside and a vehicle outside (front, rear, and sides of a vehicle).

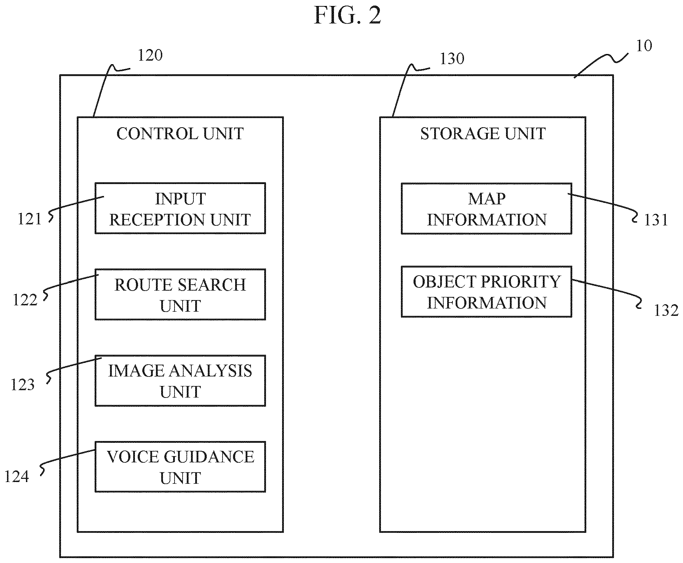

Next, a functional block indicating a functional configuration of the onboard device 10 is described. FIG. 2 illustrates one example of the functional block of the onboard device 10.

The onboard device 10 includes a control unit 120 and a storage unit 130.

The control unit 120 is implemented by the CPU 111 of the arithmetic processing device 11 executing a program loaded on the RAM 112 or a program being recorded in advance in the ROM 113. The control unit 120 includes an input reception unit 121, a route search unit 122, an image analysis unit 123, and a voice guidance unit 124.

The input reception unit 121 receives an instruction and an input of information from a user through the dial switch 252 included in the input device 25 or other hard switches. For example, the input reception unit 121 receives an operation such as setting of a target place and a search instruction for a recommended route through the input device 25 from a user.

For example, the input reception unit 121 receives, through the input device 25, an operation (hereinafter referred to as a request for alternative voice guidance) from a user who requests a re-output of voice guidance that notifies a mark of a guidance point such as an intersection where a right/left turn is to be made on a recommended route, and a right/left turn direction. However, the request for alternative voice guidance is not limited to being made through the input device 25, and may be made by a voice command being input through the microphone 241 of the voice input/output device 24, and may be made by a gesture command of a user based on an image of the inside of a vehicle captured by the image capturing device 32.

The route search unit 122 searches for a route from the current place to the target place set by a user, and generates the recommended route.

The image analysis unit 123 acquires an image of the front of a vehicle captured by the image capturing device 32. The image analysis unit 123 analyzes the acquired image, and detects, from the image, an object that may serve as a mark of a guidance point such as an intersection where a right/left turn is indicated on the recommended route generated by the route search unit 122. Note that, instead of performing an image analysis and detecting an object in the image analysis unit 123, the image analysis unit 123 may acquire an image analysis result by an onboard camera electronic control unit (ECU) or an ECU related to automatic driving.

The object refers to an intersection name sign, a road guidance sign (blue signboard), a specific facility, a signal, road paint, a characteristic building (such as a gold building and a high-rise condominium), a famous store (such as a bank, a family restaurant, a fast-food restaurant, and a gas station), and the like. Furthermore, the image analysis unit 123 selects a mark of a guidance point from detected objects. Details of a method for selecting a mark are described later.

When a distance to a guidance point such as an intersection on the recommended route generated by the route search unit 122 is equal to or less than a predetermined threshold value, the voice guidance unit 124 generates voice guidance that notifies the distance to the guidance point and a right/left turn direction, such as "turn left at intersection 300 m ahead", for example. When there is a request for alternative voice guidance from a user, the voice guidance unit 124 regenerates voice guidance by changing a mark of the guidance point every time the operation is performed. Note that details of regeneration of voice guidance are described later.

The storage unit 130 is implemented with the ROM 113 and the storage device 23. Various types of information such as map information 131, object priority information 132, and others are stored in the storage unit 130.

Information on land forms, roads, and the like that are used for the navigation function is recorded as the map information 131.

Information that represents a priority order being set in advance for kinds of objects detected from an image in which the front of a vehicle is captured is recorded as the object priority information 132.

Note that the functional blocks of the onboard device 10, which are the input reception unit 121, the route search unit 122, the image analysis unit 123, and the voice guidance unit 124, are implemented by the CPU 111 executing predetermined programs. The programs are stored in the ROM 113 or the storage device 23 of the onboard device 10, and are loaded on the RAM 112 at the time of execution and executed by the CPU 111.

Each functional block illustrated in FIG. 2 is classified according to its main processing contents, for the sake of easier understanding of the functions of the onboard device 10 implemented in the present embodiment. Therefore, how each function is classified and referred to does not limit the present invention. Each configuration of the onboard device 10 can be classified into more components, according to the processing contents. Each configuration can be classified so that one component executes more processing.

All or a part of the functional blocks may be constituted by hardware (an integrated circuit such as an ASIC, or the like) implemented in a computer. Processing of each of the functional blocks may be executed by one piece of hardware, or may be executed by a plurality of pieces of hardware.

Next, an example of alternative voice guidance is described.

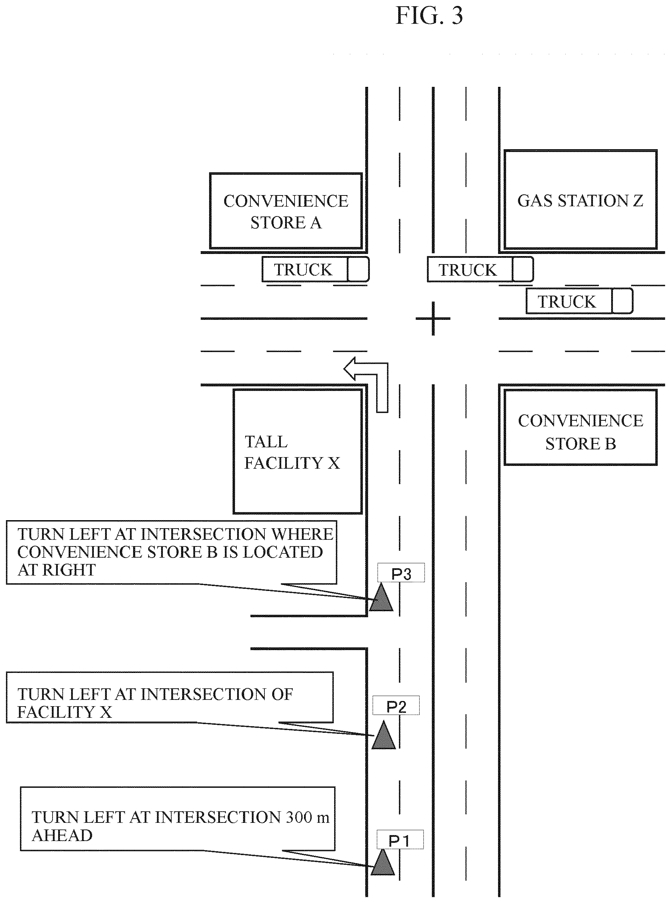

FIG. 3 illustrates one example of alternative voice guidance. For example, in a state where a vehicle reaches a point P1 300 m before an intersection being a guidance point on a recommended route, voice guidance such as "turn left at intersection 300 m ahead" is output. Next, when a user who feels the voice guidance is unclear makes a request for alternative voice guidance at a point P2, an object is detected from an image in which the front of the vehicle is captured.

Note that, although a gas station facility X, convenience stores A and B, and a gas station Z are located around the intersection in front of the vehicle, the convenience store A and the gas station Z are blocked by trucks in a case of FIG. 3, and thus the facility X and the convenience store B are detected as objects from the captured image. Then, the facility X having highest priority is selected as a mark from the detected objects, and voice guidance such as "turn left at intersection of facility X" is output at the point P2.

Next, when the user makes a request for alternative voice guidance again at a point P3, the convenience store B having highest priority is selected as a mark from the objects that are detected from the captured image and have not been yet selected as a mark, and voice guidance such as "turn left at intersection where convenience store B is located at right" is output.

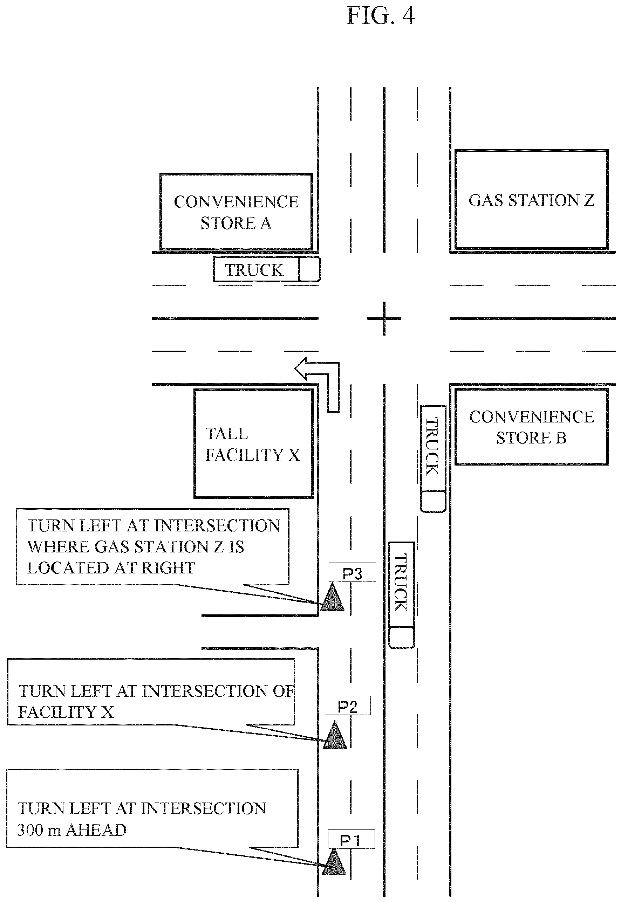

FIG. 4 illustrates another example of the alternative voice guidance. For example, in a state where a vehicle reaches the point P1 300 m before an intersection being a guidance point on a recommended route, voice guidance such as "turn left at intersection 300 m ahead" is output. Next, when a user who feels the voice guidance is unclear makes a request for alternative voice guidance at the point P2, an object is detected from an image in which the front of the vehicle is captured.

Note that, although the facility X, the convenience stores A and B, and the gas station Z are located around the intersection in front of the vehicle, the convenience stores A and B are blocked by trucks in a case of FIG. 4, and thus the facility X and the gas station Z are detected as objects from the captured image. Then, the facility X having highest priority is selected as a marker from the detected objects, and voice guidance such as "turn left at intersection of facility X" is output at the point P2.

Next, when the user makes a request for alternative voice guidance again at the point P3, the gas station Z having highest priority is selected as a mark from the objects that are detected from the captured image and have not been yet selected as a mark, and voice guidance such as "turn left at intersection where gas station Z is located at right" is output.

### <Alternative Voice Guidance Processing Performed by Onboard Device 10>

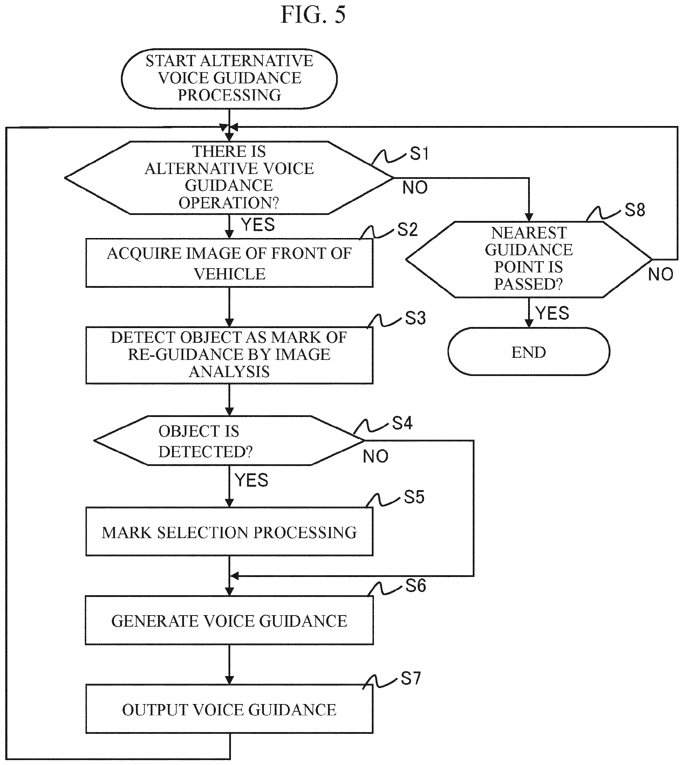

Next, FIG. 5 is a flowchart for illustrating one example of alternative voice guidance processing performed by the onboard device 10.

The alternative voice guidance processing is predicated on that the route search unit 122 already searches for a recommended route, and a vehicle is traveling on the recommended route. The alternative voice guidance processing starts after, for example, the vehicle reaches the point P1 (FIGS. 3 and 4) at a predetermined distance before a guidance point on the recommended route, and first voice guidance such as "turn left at intersection 300 m ahead" is output from the speaker 242.

First, the input reception unit 121 determines whether a request for alternative voice guidance from a user is made (Step S1). Here, when the input reception unit 121 determines that the request for alternative voice guidance is made (YES in Step S1), the image analysis unit 123 then acquires an image of the front of the vehicle captured by the image capturing device 32 (Step S2).

Next, the image analysis unit 123 analyzes the acquired image, and detects, from the image, an object that may serve as a mark of a nearest guidance point (the same guidance point as the first voice guidance that triggers the start of the alternative voice guidance processing) on the recommended route generated by the route search unit 122 (Step S3). As a method for detecting an object, for example, an existing technique such as a technique for performing pattern matching on a previously prepared image of an object and an image in which the front of the vehicle is captured can be used.

Next, the image analysis unit 123 determines whether the image analysis unit 123 successfully detects the object in Step S3 (Step S4). When the image analysis unit 123 successfully detects the object (YES in Step S4), the processing proceeds to Step S5. On the other hand, when the image analysis unit 123 fails to detect the object (NO in Step S4), the image analysis unit 123 notifies the voice guidance unit 124 of the detection failure, and skips next Step S5.

Next, the image analysis unit 123 performs mark selection processing of selecting a mark of a guidance point from the detected objects (Step S5). The mark selection processing in Step S5 is described in detail.

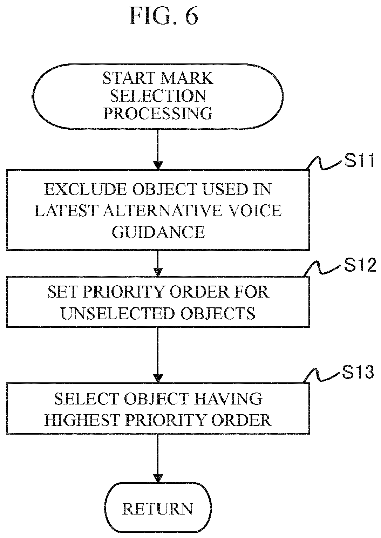

FIG. 6 is a flowchart for illustrating one example of the mark selection processing. First, the image analysis unit 123 excludes an object selected as a mark in the latest alternative voice guidance from the objects detected in Step S3 (Step S11). Note that, when the latest alternative voice guidance is not performed, Step S11 is omitted.

Next, the image analysis unit 123 refers to the object priority information 132, and sets a priority order for unselected objects according to a reference based on kinds of the unselected objects (Step S12). The reference based on the kinds of object is, for example, a descending priority order of an intersection name sign > a road guidance sign (blue signboard) > a specific facility > a signal > road paint > a characteristic building > a famous store. Note that the reference based on the kinds of objects is not limited to the example described above. The reference based on the kinds of objects may be able to be set and changed by a user.

Next, the image analysis unit 123 selects an object having the highest priority order from the unselected objects, and notifies the voice guidance unit 124 of a selection result (Step S13). After that, the processing proceeds to Step S6 in FIG. 5.

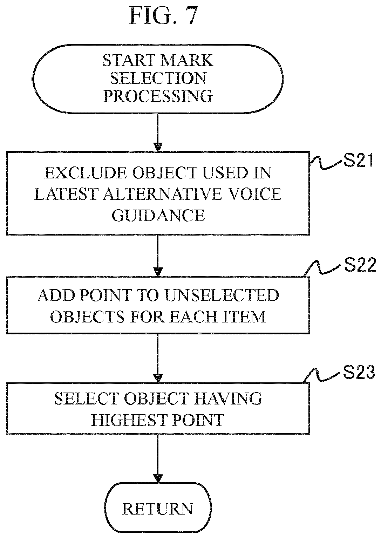

Next, FIG. 7 is a flowchart for illustrating another example of the mark selection processing. First, the image analysis unit 123 excludes an object selected as a mark in the latest alternative voice guidance from the objects detected in Step S3 (Step S21). Note that, when the latest alternative voice guidance is not performed, Step S21 is omitted.

Next, the image analysis unit 123 adds, to each unselected object, a point of priority for each item of the object (Step S22).

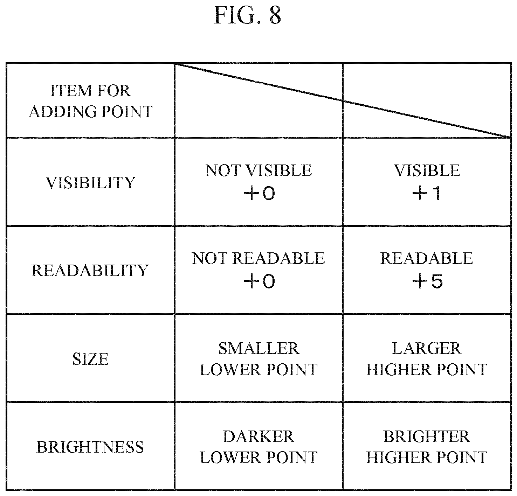

FIG. 8 illustrates each item of an object and an added point for each item. For example, for visibility, when an object is determined to be visible from a user, one point is added. When an object is determined to be not visible, no point is added. The determination whether a user can visually recognize an object may be estimated based on, for example, the size, brightness, and the like of the object. For readability, when a character on an object is determined to be readable by a user, five points are added. When a character is determined to be not readable, no point is added. The determination whether a user can read the character may be, for example, made by actually performing character recognition processing in the image analysis unit 123 or estimated based on the size, brightness, and the like of the character on the object. For size, the sizes of objects are classified into a plurality of classes, and a higher point is added to a class having a larger size. For brightness, brightness of an object is classified into a plurality of classes, and a higher point is added to a class having higher brightness. Note that adding a point to an object may be performed on only a part of the items among all of the items illustrated in FIG. 8.

According to the mark selection processing in FIG. 7, a more conspicuous object in a current situation than that in the mark selection processing in FIG. 6 can be selected.

Next, the image analysis unit 123 selects an object having the highest point of priority from the unselected objects, and notifies the voice guidance unit 124 of a selection result (Step S23).

Note that, when points of priority are the same point or a difference between points of priority is smaller than a predetermined threshold value, an object having a larger size is selected in the daytime. A brighter object is selected in the nighttime (after sunset). After that, the processing proceeds to Step S6 in FIG. 5.

Note that the mark selection processing in FIG. 7 and the mark selection processing in FIG. 8 may be combined. Specifically, a point may be added to the unselected objects according to the kinds of the unselected objects, a point may be further added for each item of the objects, and an object having the highest point of priority may be selected.

Return to FIG. 5. Next, the voice guidance unit 124 generates voice guidance (for example, voice guidance at the point P2 in FIG. 3 such as "turn left at intersection of facility X") using the mark selected in Step S5 (Step S6), and outputs the generated voice guidance from the speaker 242 (Step S7). However, when it is determined that the object is failed to be detected in Step S4 and this failure is notified, the voice guidance unit 124 generates voice guidance such as "turn left at intersection 100 m ahead" having a distance to the guidance point being updated from the first voice guidance such as "turn left at intersection 300 m ahead", and outputs the generated voice guidance from the speaker 242. After that, the processing returns to Step S1, and Step S1 and the steps thereafter are repeated.

When the input reception unit 121 determines that the request for alternative voice guidance is not made in Step S1 (NO in Step S1), the route search unit 122 then determines whether a nearest guidance point is passed (Step S8). Here, when it is determined that the nearest guidance point is not passed (NO in Step S8), the processing returns to Step S1, and the presence or absence of the request for alternative voice guidance is determined again. On the other hand, when it is determined that the nearest guidance point is passed (YES in Step S8), the alternative voice guidance processing is terminated.

The alternative voice guidance processing described above dynamically changes an object serving as a mark for a guidance point according to a current situation, and performs alternative voice guidance, and can thus more clearly notify a user of a guidance point where a right/left turn is to be made than when a distance to the guidance point is simply notified to the user.

The effects described in the present specification are merely examples, and are not limited thereto. Other effects may be exerted.

The present invention is not limited to the embodiments described above, and includes various modification examples. For example, each of the embodiments described above is described in detail for the sake of easier understanding of the present invention, and the present invention is not necessarily limited to including all the configurations described herein. It is possible to replace a part of a configuration of one embodiment with a configuration of another embodiment. It is also possible to add a configuration of one embodiment to a configuration of another embodiment. Another configuration can be added to, deleted from, and replaced with a part of a configuration of each of the embodiments.

A part of or an entirety of the configurations, functions, processing units, processing means, and the like described above may be implemented by hardware by designing those with, for example, integrated circuits or the like. Each of the configurations, functions and the like described above may be implemented by software by a processor that interprets and executes programs for achieving each function. Information for achieving each of the functions, such as a program, a determination table, and a file may be placed in a storage device such as a memory, an HDD, and a solid state disk (SSD), and a recording medium such as an IC card, a secure digital (SD) card, and a DVD. Illustrations of control lines and information lines are those considered to be necessary for the sake of description, and not necessarily include all the control lines and information lines necessary as a product. In actuality, it may be considered that almost all the configurations are connected to each other.

In addition to the display control device and the display control method, the present invention may be provided in various forms such as a computer-readable program.

## Claims

1. A navigation device (10) comprising:
an image analysis unit (123) configured to analyze an image in which a front of a vehicle is captured;
a storage unit (130) configured to store map information;
a route search unit (122) configured to search for a route to a target place set by a user, based on the map information to generate a recommended route;
a voice guidance unit (124) configured to provide, by voice or sound, guidance to a guidance point on the generated recommended route; and
an input reception unit (25) configured to receive a request for alternative voice guidance from the user, wherein
when the input reception unit (121) receives the request for alternative voice guidance, the voice guidance unit generates voice guidance for notifying the user of the guidance point, based on an analysis result of the image.

2. The navigation device according to claim 1, wherein
the image analysis unit (123) detects an object serving as a mark of the guidance point from the image, and
the voice guidance unit (124) generates the voice guidance including wording indicating the detected object.

3. The navigation device according to claim 2, wherein
the image analysis unit (123) sets a priority order for a plurality of objects detected from the image, and selects the object, based on the priority order, and
the voice guidance unit (124) generates the voice guidance including wording indicating the selected object.

4. The navigation device according to claim 2, wherein
the image analysis unit (123) sets a point of priority by adding, for each item of an object, a point to a plurality of objects detected from the image, and selects the object, based on the point of the priority, and
the voice guidance unit (124) generates the voice guidance including wording indicating the selected object.

5. The navigation device according to claim 4, wherein
the item of the object includes at least one of visibility, readability, size, and brightness.

6. The navigation device according to claim 4, wherein,
when points of the priority of the plurality of objects are the same point or a difference between the points of the priority is equal to or less than a predetermined threshold value, the image analysis unit (123) selects an object having a larger size in the daytime, and selects brighter object in the nighttime.
